Europäisches Patentamt

European Patent Office

Office européen des brevets

(19)

(11) Veröffentlichungsnummer: **0 022 918**
**B1**

(12) **EUROPÄISCHE PATENTSCHRIFT** ·

(45) Veröffentlichungstag der Patentschrift: **08.02.84**

(21) Anmeldenummer: **80103067.7**

(22) Anmeldetag: **03.06.80**

(51) Int. Cl.³: **B 64 C 27/33**

(54) **Befestigungsvorrichtung für die übereinander angeordneten Verbindungselemente von Rotorblättern, insbesondere für einen Hubschrauber.**

(30) Priorität: **24.07.79 DE 2929906**

(43) Veröffentlichungstag der Anmeldung:
**28.01.81 Patentblatt 81/4**

(45) Bekanntmachung des Hinweises auf die Patenterteilung:
**08.02.84 Patentblatt 84/6**

(84) Benannte Vertragsstaaten:
**FR GB IT**

(56) Entgegenhaltungen:
**FR - A - 2 041 747**
**FR - A - 2 125 150**
**GB - A - 2 001 025**
**GB - A - 2 009 072**
**US - A - 3 880 551**
**US - A - 4 047 839**

**Luftfahrtnorm (LN) 29505, Juni 1974, Beuth-Vertrieb GmbH, Köln**

(73) Patentinhaber: **Messerschmitt-Bölkow-Blohm Gesellschaft mit beschränkter Haftung** ·
**Postfach 801109**
**D-8000 München 80 (DE)**

(72) Erfinder: **Brunsch, Klaus, Dipl.-Ing.**
**Asternweg 11**
**D-8190 Weidach (DE)**
Erfinder: **Nowak, Franz**
**Edelweissstrasse 68**
**D-8021 Taufkirchen (DE)**

Courier Press, Leamington Spa, England.

Befestigungsvorrichtung für die übereinander angeordneten Verbindungselemente von
Rotorblättern, insbesondere für einen Hubschrauber

Die Erfindung bezieht sich auf eine Vorrichtung zum Befestigen von übereinander kreuzweise angeordneten Verbindungselementen, die jeweils zwei gegenüberliegende Rotorblätter zu einem Stück verbinden, insbesondere für einen Hubschrauber, nach dem Oberbegriff des Patentanspruchs 1.

Es ist bereits ein zweiflügeliger bzw. vierflügeliger Rotor für einen Hubschrauber bekannt, bei welchem die einander gegenüberliegenden Rotorblätter durch ein blattfederartiges Verbindungselement miteinander verbunden sind, das aus einem Laminatkörper aus unidirektionalen Fasern besteht, die in den Blattwurzeln der Rotorblätter verankert sind. Durch die Blattfederwirkung dieses Laminatkörpers wird eine geringe Steifigkeit in Schlagrichtung erreicht, die durch eine flexible Halterung am Rotormast unterstützt wird, aufgrund derer auch die Blattwinkelbewegung über im Blattwurzelbereich angeformte Steuerhebel möglich wird. Bei der Ausbildung eines vierblättrigen Rotors sind die Verbindungselemente rechtwinklig übereinanderlaufend angeordnet, wobei sie gegeneinander und am Rotormast durch diagonal verspannte Schichten aus unidirektionalen Fasern elastisch verankert sind (US-PS 3 880 551).

Die Bekannte Anordnung hat den Nachteil, daß der erforderliche Gelenkeffekt teilweise von der mastseitigen Befestigung ausgeübt wird, was einen starken Verschleiß bedeutet. Außerdem sind die Steifigkeit des Verbindungselements in Schwenkrichtung und in Richtung der Torsionsbewegung relativ groß. Zusätzlich ist die elastische Einspannung der Verbindungselemente, soweit sie überhaupt praktikabel ist, sehr aufwendig.

Die der Erfindung zugrundeliegende Aufgabe besteht nun darin, die Vorrichtung nach dem Oberbegriff des Patentanspruchs 1 so auszubilden, daß eine einfache Befestigung des oder der Verbindungselemente am Rotormast möglich wird, die unter Gewährleistung einer ausreichend großen Befestigungsfläche und unter Vermeidung einer Schwächung der Querschnittsfläche der Verbindungselemente von Einflüssen aus Schlag- und Schwenkbewegung der Rotorblätter und Torsion des oder der Verbindungselemente möglichst freigehalten wird.

Diese Aufgabe wird durch die im Anspruch 1 aufgeführten Maßnahmen gelöst.

Unter der erwähnten ±ß-Faserverbundschicht ist ein aus Faserlagen zusammengesetztes Material zu verstehen, wobei die Fasern jeder Lage oder die Fasern Benachbarter Lagen mit der Nullinie den Winkel ß bilden. Die Fasern jeder Lage bzw. die Fasern benachbarter Lagen sind somit kreuzweise angeordnet.(Luftfahrtnorm (LN) 29505, Juni 1974, Beuth-Vertrieb GmH, Köln).

Durch die Verdickung der ±ß-Schicht innerhalb des Befestigungsflansches wird die Gesamthöhe des Verbindungselementes innerhalb des Befestigungsbereiches vergrößert,. wodurch die Steifigkeit der Anordnung in Schlagrichtung beachtlich erhöht und dafür gesorgt wird, daß das Quasigelenk sehr nahe an der Rotorachse innerhalb der Fläche des Befestigungsflansches liegen kann. Dadurch daß die ohrenförmigen parallelen Abschnitte seitlich und zu dem zugehörigen Verbindungselement herausgezogen sind, wird die gesamte Befestigungsfläche der Verbindungselemente vergroßert, wobei diese Fläche jedoch im wesentlichen von den Einwirkungen aus der Schlag- und Schwenkbewegung und gegebenenfalls aus der Torsion freigehalten wird. Da sich die Spanneinrichtungen, beispielsweise die Spannbolzen außerhabl der Verbindungselemente befinden, müssen sie nicht durch die Verbindungselemente hindurchgeführt werden, so daß deren die Fliehkräfte übertragenden unidirektionalen Faserschichten durch Bohrungen nicht beeinträchtigt sind.

Der Übergangsbereich zwischen dem Verbindungselement und dem jeweiligen ohrenförmigen parallelen Abschnitt ist relativ klein und damit auch die Strecke, längs der die Längenänderung der unidirektionalen Faserschichten des Verbindungselements infolge Fliehkraft durch den jeweils mit dem Befestigungsflansch sowie dem Halteelement starr verbundenen ohrenförmigen Abschnitt behindert wird. Dadurch ergibt sich in diesem Bereich eine Schubspannung, die für die üblicherweise verwendeten Materialien im zulässigen Bereich liegt.

Mit der Maßnahme nach Unteranspruch 2 wird erreicht, daß die Haftfläche zwischen der ±ß-Faserverbundschicht und der unidirektionalen Schicht verdoppelt wird, wodurch das Antriebsdrehmoment aus der Rotorwelle über eine relative große Fläche eingeleitet werden kann.

Mit der Maßnahme nach Unteranspruch 3 wird ein Höhenausgleich bei der haftenden Verbindung der Schichten im Bereich der parallelen Abschnitte erhalten.

Mit der Maßnahme nach Unteranspruch 4 wird erreicht, daß die Verformung der Verbindungselemente bis zu einem geringen Abstand von der Rotorachse möglich ist, ohne daß der große Befestigungsbereich davon beeinflußt wird.

Mit der Maßnahme nach Unteranspruch 5 läßt sich mit einfachen Mitteln ein Festspannen der Vorrichtung erreichen, wobei die Abschnitte bei einem vierflügeligen Rotor senkrecht zueinander liegen und die Durchgangsbohrungen für die Spannbolzen fluchtend zueinander ausgerichtet sind. Eine Durchführung der Spannbolzen durch die Verbindungselemente selbst, was eine Schwächung der Verbindungselemente bedeuten würde, entfällt.

Mit der Maßnahme nach Unteranspruch 6 wird erreicht, daß die Krafteinleitung üher eine vergrößerte Fläche erfolgen kann.

Dabei ist daran gedacht, die Außenränder der parallelen Abschnitte in eine entsprechende Ausnehmung im Befestigungsflansch bzw. im Halteelement einzupassen und Flansch und Element durch Spannbolzen oder durch andere Spanneinrichtungen miteinander zu verbinden.

Anhand der Zeichnungen wird die Erfindung beispielsweise näher erläutert. Es zeigt:

Fig. 1 eine Ausführungsform der Vorrichtung für einen vierblättrigen Rotor im Längsschnitt und

Fig. 2 eine Draufsicht auf die Vorrichtung von Fig. 1 bei abgehobenen Halteelement.

Die in der Zeichnung dargestellte Vorrichtung dient zum Befestigen von übereinander kreuzweise angeordneten Verbindungselementen 1 und 2, die jeweils zwei gegenüberliegende, nicht gezeigte Rotorblätter zu einem Stück verbinden. Die Verbindungselemente übernehmen dabei die Funktion eines Schlaggelenks und eines Schwenkgelenks. Außerdem ermöglichen sie die erforderliche Torsion.

Der Rotormast 3 hat einen Befestigungsflansch 31, auf dem eine Platte 35 aus Metall angeordnet ist. Die Abdeckung erfolgt durch ein plattenförmiges Haltelement 32. Durch entsprechende Bohrungen wird der Spannbolzen 33 geführt und mittels Muttern 34 am Befestigungsflansch 31 festgelegt.

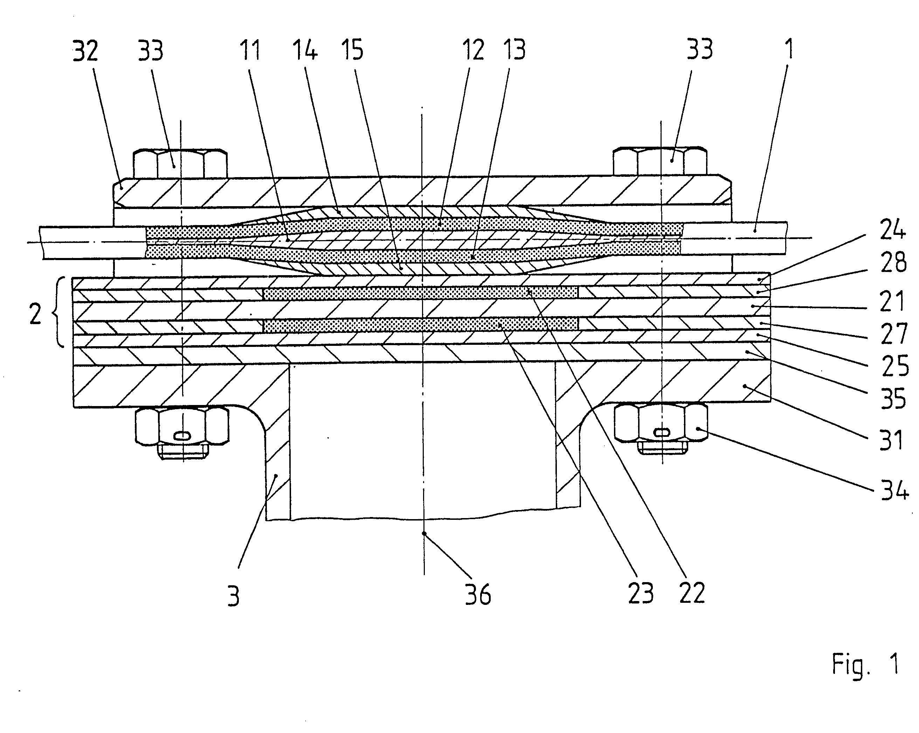

Das Verbindungselement 1 für die in Fig. 1 obenliegenden einander gegenüber angeordneten Rotoblätter besteht aus zwei unidirektionalen Faserschichten 12 und 13, zwischen denen eine ±ß-Faserverbundschicht 11 angeordnet ist, deren Aufbau bereits erläutert wurde. Die unidirektionalen Faserschichten 12 und 13 sind mit der ±ß-Faserverbundschicht 11 haftend durch Verwendung geeigneter Klebemittel verbunden. Die ±ß-Faserverbundschicht 11 ist in dem innerhalb des Begrenzungsflansches 31 liegenden Bereich, der sich in der Zeichnung oberhalb des Mastes 3 erstreckt, verstärkt. Durch diese Verstärkung werden die unidirektionalen Faserschichten 12 und 13 nach außen gewölbt, wodurch die Gesamthöhe des Verbindungselements innerhalb des Befestigungsbereiches vergrößert wird und dadurch die Steifigkeit des Verbindungselements in Schlagrichtung erhöht wird. Auf die der ±ß-Faserverbundschicht gegenüberliegenden Seite der unidirektionalen Faserschichten 12 und 13 sind Auflagen 14 bzw. 15 aus ±ß-Faserverbundmaterial aufgebracht.

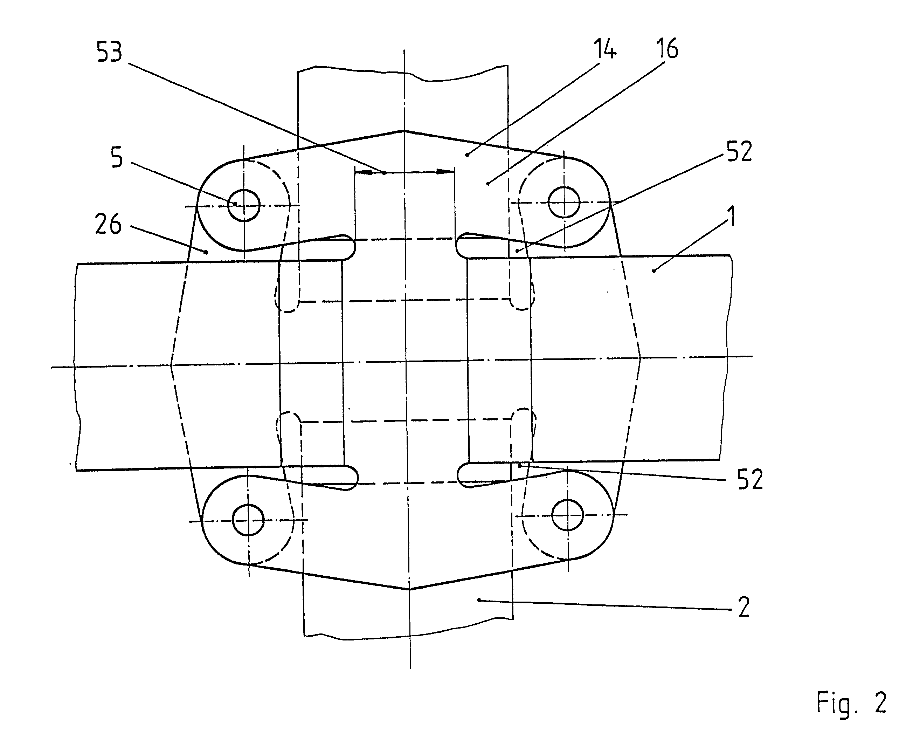

Wie aus Fig. 2 zu ersehen ist, ist die Auflage 14 senkrecht zur Längserstreckung des Verbindungselements 1 in einem Längenbereich 53, der im wesentlichen dem Kontaktbereich entspricht, herausgezoen. Dieser herausgezogene Bereich geht auf beiden Seiten in Abschnitte 16 über, die im wesentlichen parallel zu der Längserstreckung des Verbindungselements 1 verlaufen und in etwa ohrenförmig ausgebildet sind, wobei zwischen dem Verbindungselement 1 und jedem Abschnitt 16 ein Abstand 52 verbleibt, der so bemessen ist, daß ein Kontakt zwischen dem Abschnitt 16 und dem Verbindungselement 1 unabhängig von der aufgrund des Betriebszustands bedingten Verformung des Verbindungselements 1 nicht zustandekommen kann. Im Bereich der Enden der ohrenförmig ausgebildeten zum Verbindungselement 1 parallelen Abschnitte 16 sind Bohrungen 5 ausgebildet, durch die sich die Spannbolzen 33 erstrecken.

Der verdickte Bereich der ±ß-Faserverbundschicht 11 ist genauso ausgebildet wie die Auflagen 14 und 15. Das heißt, daß dieser verdickte Teil ebenfalls seitlich vom Verbindungselement 1 herausgezogen ist und in parallelen Abschnitten endet, die in der Fig. 2 unter den parallelen Abschnitten 16 der Auflage 14 liegen. Schließlich ist die dem Verbindungselement 2 zugewandte Auflage 15 ebenso wie die Auflage 14 ausgebildet. Um im Bereich der parallelen Abschnitte Höhengleichheit zu erreichen, sind Füllagen eingesetzt und haftend mit den Abschnitten verbunden, was anhand des Verbindungselements 2 erläutert wird.

Das Verbindungselement 2 ist genauso aufgebaut wie das Verbindungselement 1, jedoch senkrecht dazu angeordnet. Wie aus Fig. 1 zu ersehen ist, hat das Verbingungselement 2 eine mittlere ±ß-Faserverbundschicht 21, mit der auf beiden Seiten unidirektionale Faserschichten 22 und 23 haftend verbunden sind, an die sich jeweils auf der der ±ß-Faserverbundschicht 21 gegenüberliegenden Seite ein Auflage 24 bzw. 25 aus ±ß-Faserverbundmaterial anschließt. Der verstärkte Teil der mittleren ±ß-Faserverbundschicht 21 sowie die Auflagen 24 und 25 sind, wie aus Fig. 1 zu ersehen ist, in der in Fig. 2 für die Auflage 14 gezeigten Weise nach außen gezogen, wobei durch Einfügen der Füllschichten 27 und 28 und eine haftende Verbindung mit den angrenzenden Schichten ein Höhenausgleich erreicht wird, wie er auch beim Verbindungselement 1 vorgesehen ist. Als Material für die Füllschichten 27 und 28 werden gewöhnlich Gewebelagen verwendet, beispielsweise ±ß-Faserverbundmaterial. Da die Verbindungselemente 1 und 2 zueinander senkrecht angeordnet sind, sind auch die parallelen Abschnitte 16 und 26 senkrecht zueinander, wobei die Ausrichtung jedoch so getroffen ist, daß die Durchgangsbohrungen 5 bei der gezeigten Anordnung fluchten. Der Kontaktbereich der Verbindungselemente liegt bei der gezeigten Anordnung innerhalb des Längserstreckungsbereich 53 und innerhalb des Bereichs der Abschnitte 16 und 26 der Auflagen 24 und 25 und der ±ß-Faserverbundschicht 21 bzw. der Auflagen 14 and 15 und der ±ß-Faserverbundschicht 11. Die Drehachse des Rotormastes 3 ist in Fig. 1 mit 36 bezeichnet.

## Patentansprüche

1. Vorrichtung zum Befestigen von übereinander kreuzweise angeordneten Verbindungselementen, die jeweils zwei gegenüberliegende Rotorblätter zu einem Stück verbinden insbesondere für einen Hubschrauber, mit einem mastseitigen Befestigungsflansch und einem die Verbindungselemente dagegen spannenden Halteelement, wobei jedes Verbindungselement unidirektionale Faserschichten aufweist, dadurch gekennzeichnet, daß jedes Verbindungselement (1, 2) wenigstens zwei unidirektionale Faserschichten (12, 13; 22, 23) aufweist, zwischen denen in haftender Verbindung eine ±ß-Faserverbundschicht (11, 21) angeordnet ist, deren Dicke innerhalb der Fläche des Befestigungsflansches (31) vergrößert ist und die mit dieser vergrößerten Dicke im Mittelbereich der Fläche des Befestigungsflansches (31) im wesentlichen senkrecht zur Richtung der unidirektionalen Fasern auf beiden Seiten über die Quererstreckung des Verbindungselementes (1, 2) hinausgezogen ist und jeweils in zwei zur Längserstreckung des Verbindungselements (1, 2) im wesentlich parallelen und im Abstand davon befindlichen Abschnitten (16, 26) endet, die an dem Befestigungsflansch (31) bzw. Halteelement (32) festgelegt sind.

2. Vorrichtung nach Anspruch 1, dadurch gekennzeichnet, daß wenigstens eine der unidirektionalen Faserschichten (12, 13; 22, 23) innerhalb der Fläche des Befestigungsflansches (31) eine haftend damit verbundene Auflage (14, 15; 24, 25) aus einer ±ß-Faserverbundschicht aufweist, die mit gleichbleibender Dicke im Mittelbereich der Fläche des Befestigungsflansches (31) im wesentlichen senkrecht zur Richtung der unidirektionalen Fasern auf beiden Seiten über die Quererstreckung des Verbindungselements (1, 2) hinausgezogen ist und jeweils in zwei zur Längserstreckung des Verbindungselements (1, 2) im wesentlichen parallelen und im Abstand davon befindlichen Abschnitten (16, 26) endet, die an dem Befestigungsflansch (31) bzw. Halteelement (32) festgelegt sind.

3. Vorrichtung nach Anspruch 1 oder 2, gekennzeichnet durch haftend verbundene Flüschichten (28, 27) aus ±ß-Faserverbundmaterial zum Ausgleich der sich nicht in den Bereich jedes parallelen Abschnitts (16, 26) erstreckenden unidirektionalen Faserschichten (12, 13; 22, 23).

4. Vorrichtung nach einem der vorhergehenden Ansprüche, dadurch gekennzeichnet, daß der Abstand (52) zwischen jedem parallelen Abschnitt (16, 26) und dem Verbindungselement (1, 2) für die Aufrechterhaltung der Berührungsfreiheit dazwischen bei allen Betriebszuständen ausreichend groß bemessen ist.

5. Vorrichtung nach einem der vorhergehenden Ansprüche, dadurch gekennzeichnet, daß in jedem der parallelen Abschnitte (16, 26) zumindest eine Durchgangsbohrung (5) für die Aufnahme von Spannbolzen (33) vorgesehen ist.

6. Vorrichtung nach einem der vorhergehenden Ansprüche, dadurch gekennzeichnet, daß die bezogen auf die Verbindungselemente (1, 2) außenliegenden Ränder der parallelen Abschnitte (16, 26) formschlüssig an dem Befestigungsflansch (31) bzw. an dem Halteelement (32) angreifen.

## Revendications

1. Dispositif servant à la fixation d'éléments de raccordement qui sont disposés en croix l'un au-dessus de l'autre et réunissent respectivement en une seule pièce deux pales de rotor opposées, en particulier pour un hélicoptère, et comportant une bride de fixation, côté mât, et un élément de serrage assujettissant les éléments de raccordement contre celle-ci, chaque élément de raccordement comprenant des couches de fibres unidirectionnelles, caractérisé par le fait que chaque élément de raccordement (1, 2) comprend aux moins deux couches de fibres unidirectionnelles (12, 13; 22, 23) entre lesquelles est insérée, avec liaison par adhérence, une couche composite fibreuse ±ß (11, 21) dont l'épaisseur est augmentée à l'intérieur de la surface de la bride de fixation (31) et qui, avec cette augmentation d'épaisseur, se prolonge dans la zone médiane de la surface de la bride de fixation (31) sensiblement perpendiculairement au sens des fibres unidirectionnelles des deux côtés pour dépasser l'élément de raccordement (1, 2) dans le sens de sa largeur et se termine en deux sections (16, 26) qui, sensiblement parallèles à l'élément de raccordement (1, 2) dans le sens de sa longueur et disposées à distance de ce dernier, sont fixées sur la bride de fixation (31) et sur l'élément de serrage.

2. Dispositif selon la revendication 1, caractérisé par le fait qu'au moins l'une des couches de fibres unidirectionnelles (12, 13; 22, 23) comporte à l'intérieur de la surface de la bride de fixation (31) un revêtement (14, 15; 24, 25) constitué par une couche composite fibreuse ±ß qui lui est reliée par adhérence et qui dans la zone médiane de la surface de la bride de fixation (31) se prolonge avec épaisseur constante sensiblement perpendiculairement au sens des fibres unidirectionnelles des deux côtés pour dépasser l'élément de raccordement (1, 2) dans le sens de sa largeur et se termine en deux sections (16, 26) qui, sensiblement parallèles à l'élément de raccordement (1, 2) dans le sens de sa longueur et disposées à distance de ce dernier, sont fixées sur la bride de fixation (31) et sur w'élément de serrage (32).

3. Dispositif selon la revendication 1 ou 2, caractérisé par des couches de remplissage (28, 27) réalisées en matériau composite fibreux ±ß et reliées par adhérence pour égaliser les couches de fibres unidirectionnelles (12, 13; 22, 23) ne s'étendent pas dans la zone de chaque section parallèle (16, 26).

4. Dispositif selon l'une revendications précédentes, caractérisé par le fait que la distance (52) entre chaque section parallèle (16, 26) et l'élément de raccordement (1, 2) est mesurée suffisamment grande pour maintenir l'absence de contact entre eux dans toutes les conditions de fonctionnement.

5. Dispositif selon l'une de revendications précédentes, caractérisé par le fait que dans chacune des sections parallèles (16, 26) est prévu au moins un perçage (5) pour le passage des boulons de serrage (33).

6. Dispositif selon l'une des revendications précédentes, caractérisé par le fait que les bords, situés à l'extérieur par rapport aux éléments de raccordement (1, 2), des sections parallèles (16, 26), sont appliqués sur la bride de fixation (31) et sur l'élément de serrage (32) en formant une liaison claboté.

## Claims

1. A device for fastening connecting elements which are arranged crosswise one above the other and which in each case connect two opposite rotor blades into one piece, more especially for a helicopter, comprising a mast-side attachment flange and a retaining element which clamps the connecting elements thereagainst, in which respect each connecting element has unidirectional fibre layers, characterised in that each connecting element (1, 2) has at least two unidirectional fibre layers (12, 13; 22, 23), between which there is arranged in adhesive connection a ±ß-fibre composite layer (11, 21), the thickness of which is enlarged within the surface of the attachment flange (31) and which with this enlarged thickness in the centre region of the surface of the attachment flange (31) is drawn substantially perpendicular to the direction of the unidirectional fibres on both sides beyond the transverse extent of the connecting element (1, 2) and in each case ends in two portions (16, 26) which are disposed substantially parallel to the longitudinal extent of the connecting element (1, 2) and at a spacing therefrom and which are secured to the attachment flange (31) or retaining element (32) respectively.

2. A device according to claim 1, characterised in that at least one of the unidirectional fibre layers (12, 13; 22, 23) within the area of the attachment flange (31) has an overlay (14, 15; 24, 25) connected adhesively thereto and made from a ±ß-fibre composite layer which with constant thickness in the centre region of the surface of the attachment flange (31) is drawn substantially perpendicular to the direction of the unidirectional fibres on both sides beyond the transverse extent of the connecting element (1, 2) and in each case ends in two portions (16, 26) which are disposed substantially parallel to the longitudinal extent of the connecting element (1, 2) and at a spacing therefrom and which are secured to the attachment flange (31) or retaining element (32) respectively.

3. A device according to claim 1 or 2 characterised by adhesively connected filling layers (28, 27) made from ±ß-fibre composite material for compensating for the unidirectional fibre layers (12, 13; 22, 23) not extending into the region of each parallel portion (16, 26).

4. A device according to any one of the preceding claims, characterised in that the distance (52) between each parallel portion (16, 26) and the connecting element (1, 2) for the maintenance of the contact freedom therebetween in all operational states is adequately large in dimension.

5. A device according to any one of the preceding claims, characterised in that at least one through-hole (5) for the reception of clamping bolts (33) is provided in each of the parallel portions (16, 26).

6. A device according to any one of the preceding claims, characterised in that the edges, lying on the outside relative to the connecting elements (1, 2) of the parallel portions (16, 26) act in a form-locking manner on the attachment flange (31) or on the retaining element (32) respectively.

Fig. 1

0 022 918

Fig. 2

0 022 918